# EUROPEAN PATENT SPECIFICATION

(11) **EP 2 808 535 B1**
(45) Date of publication and mention of the grant of the patent: **04.04.2018**
(21) Application number: 14169675.7
(22) Date of filing: 23.05.2014
(51) Int. Cl.: F02N 11/08

(54) **Engine control unit**
Motorsteuerungseinheit
Boîtier de commande du moteur

(30) Priority: 31.05.2013 JP 2013115861
(43) Date of publication of application: 03.12.2014
(73) Proprietor: Mitsubishi Jidosha Kogyo K.K., Tokyo 108-8410 (JP)
(72) Inventor: Funakoshi, Hiroshi, Tokyo 108-8410 (JP); Nakamura, Satoru, Tokyo 108-8410 (JP); Miyata, Toshiyuki, Tokyo 108-8410 (JP); Ide, Hideto, Tokyo 108-8410 (JP)
(74) Representative: Vossius & Partner Patentanwälte Rechtsanwälte mbB

(56) References cited:
- EP-A2- 2 159 410
- EP-A2- 2 345 808
- US-A1- 2010 305 820
- US-A1- 2011 178 695

## Description

### FIELD

The present invention relates to a unit that controls an engine equipped in a vehicle.

### BACKGROUND

An idling-stop control, one of the engine controls to improve the fuel efficiency of a vehicle, has been developed. The idling-stop control stops fuel injection to stop the engine in response to an automatic-stop requirement to the engine. The control then activates a starter to restart the engine in response to a restart requirement to the engine.

Under the idling-stop control, the restart requirement may occur to the engine having a decreased number of engine revolutions immediately after the automatic-stop requirement. A technique to restart the engine in such a case is disclosed in Patent Literature 1, for example.

PL 1 (Japanese Patent No. 4329268) discloses the use of different modes for restarting the engine depending on the number of engine revolutions in response to a restart requirement. In specific, the engine is restarted by fuel injection without a starter if the number of engine revolutions exceeds a predetermined number. This configuration can restart the engine before a decrease in the number of engine revolutions, thereby achieving a rapid restart of the engine. In contrast, the engine is restarted with the starter if the number of engine revolutions does not exceed the predetermined number. This configuration can ensure a restart of the engine. US 2011/0178695 is another example for the use of different modes for restarting depending on the number of engine revolutions in response to a restart requirement.

A typical starter for the idling-stop control applies torque to the engine via an engagement/disengagement mechanism for a gear, such as a mechanism for causing a pinion gear to stick out and engage with a ring gear of the engine upon a start of the engine.

Unfortunately, the engagement of the gear of the starter with the gear of the engine before a decrease in the number of engine revolutions may fail and lead to damage in the gears or the engagement/disengagement mechanism. In PL 1, the starter is activated to restart the engine having a predetermined number of engine revolutions or smaller even before a decrease in the number of engine revolutions. This configuration may cause damage in the gear or the engagement/disengagement mechanism therefor in the starter.

### SUMMARY

### TECHNICAL PROBLEMS

An object of the invention, which has been accomplished in light of the problems described above, is to provide an engine control unit that can achieve the compatibility between a rapid restart of an engine and a secure restart of the engine without damage of a starter.

Another object of the invention is to provide advantageous effects that are derived from the individual features described in the Description of Embodiment below but not from conventional techniques.

### SOLUTION TO PROBLEMS

To achieve the objects, the engine control unit according to the invention automatically restarts an automatically-stopped engine in response to a restart requirement, in a vehicle including an engine speed sensor to detect the number of revolutions of the engine, an injector to inject fuel into the engine, and a starter to apply torque to the engine via an engagement/disengagement mechanism for a gear. The engine control unit includes: a restart controller to perform a first restart control if the number of engine revolutions in response to the restart requirement is larger than a first number, the first restart control restarting the engine by the actuation of the injector without the actuation of the starter, and to keep the injector inactive until the number of engine revolutions decreases to a second number and perform a second restart control after the decrease in the number of engine revolutions to the second number if the number of engine revolutions is equal to or smaller than the first number in response to the restart requirement, the second restart control restarting the engine by the actuation of both the starter and the injector, the second number being smaller than the first number; a failure determiner to determine a failure in the restart of the engine under the first restart control; and a failure mode controller to keep the injector inactive until the number of engine revolutions decreases to the second number and perform the second restart control after the decrease in the number of engine revolutions to the second number, if the failure determiner determines the failure.

The failure determiner determines the failure if the number of engine revolutions decreases to a third number during the restart of the engine under the first restart control, the third number being smaller than the first number and larger than the second or if the number of engine revolutions is equal to or smaller than the first number after a number of restart strokes of the engine under the first restart control.

It is preferred that the failure mode controller control an accessory equipped with the engine to apply a load on the engine during the stop of the injector in response to the determination of the failure by the failure determiner.

It is preferred that the starter include a pinion gear, a motor to rotate the pinion gear, and an engagement/disengagement mechanism to engage or disengage the pinion gear with or from a ring gear of the engine. ADVANTAGEOUS EFFECTS

In the engine control unit according to the invention, the engine is restarted by the actuation of the injector without the actuation of the starter if the number of engine revolutions in response to the restart requirement is larger than the first number. This configuration can rapidly restart the engine without waiting for a decrease in the number of engine revolutions.

For example, if the restart requirement occurs immediately after the automatic-stop requirement to the engine having a decreased number of engine revolutions larger than the first number, the engine can be rapidly restarted with the injector alone without starting torque. This configuration can ensure the drivability.

In contrast, if the number of engine revolutions in response to the restart requirement is equal to or smaller than the first number, the starter is activated after the number of engine revolutions decreases to the second number smaller than the first number. This configuration can prevent or avoid damage in the gear or the engagement/disengagement mechanism therefor in the starter.

If a failure is determined in the restart of the engine under the first restart control, the second restart control is performed after the stop of the injector until the number of engine revolutions decreases to the second number. This configuration can definitely restart the engine while preventing or avoiding damage of the starter.

The engine control unit can therefore achieve the compatibility between a rapid restart of an engine and a secure restart of the engine without damage of the starter.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:

FIG. 1 is a schematic diagram illustrating the entire configuration of an engine control unit according to an embodiment of the invention;
FIG. 2 is a flowchart illustrating steps of a control in response to a restart requirement by a restart controller in an engine control unit according to the embodiment of the invention;
FIG. 3 is a flowchart illustrating steps of a control after occurrence of a restart requirement by a restart controller in an engine control unit according to the embodiment of the invention; and
FIG. 4 is a time chart illustrating an example restart of an engine by an engine control unit according to the embodiment of the invention.

### DESCRIPTION OF EMBODIMENTS

An embodiment of the invention will now be described with reference to the drawings. The engine control unit according to the embodiment is equipped in a vehicle. Examples of the vehicle include small cars, such as passenger cars, and large cars, such as trucks and buses.

### [1. Configuration]

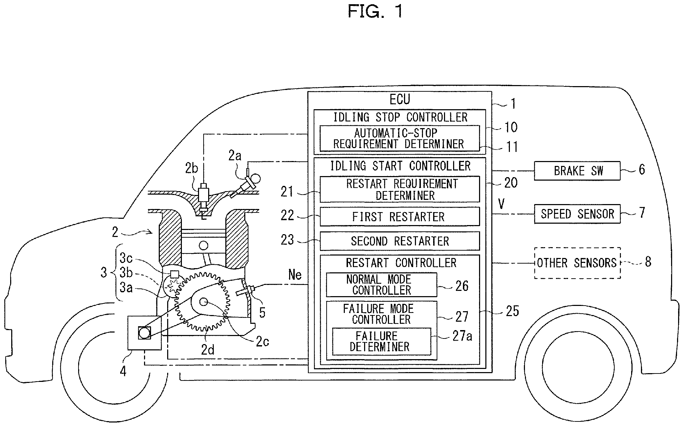

The entire configuration of a vehicle according to an embodiment will now be described with reference to FIG. 1. The vehicle includes an engine control unit (hereinafter referred to as "ECU") 1, and devices 2 to 8 connected to the inputs and outputs of the ECU 1. The ECU 1 is an electronic control unit including a large-scale integration (LSI) device or an embedded electronic device into which a microprocessor, a read only memory (ROM), and a random access memory (RAM) are integrated.

### [1-1. Devices Connected to Inputs and Outputs of Control Unit]

The ECU 1 is connected to control the devices 2 to 4 via its outputs and to the detectors 5 to 8 to detect information on control via its inputs.

### [1-1-1. Devices on Output Side]

The devices 2 to 4 connected to the outputs of the ECU 1 will now be described.

The engine 2 is an internal combustion engine to drive the vehicle. The engine 2 includes an injector 2a to inject fuel into the engine 2, a spark plug 2b to ignite the fuel injected from the injector 2a, a crank shaft 2c coupled to an output shaft (not shown), and a ring gear (second gear) 2d rotatable with the crank shaft 2c.

The injector 2a is connected to the ECU 1 via a control line, and is controlled by the ECU 1 to inject the fuel or stop the injection. The spark plug 2b is also connected to the ECU 1 via a control line, and is controlled by the ECU 1 to ignite the fuel or stop the ignition.

The engine 2 is provided with the starter 3 and the accessories 4.

The starter 3 applies torque to the engine 2. In specific, the starter 3 electrically rotates the crank shaft 2c of the engine 2. The starter 3 or a power supply switch therefor (not shown) is connected to the ECU 1 via a control line, so that the ECU 1 activates or inactivates the starter 3.

The starter 3 includes a starter motor 3a, a pinion gear 3b rotated by the starter motor 3a, and an engagement/disengagement mechanism 3c to engage or disengage the pinion gear 3b with or from the ring gear 2d of the engine 2.

The starter motor 3a is powered by a vehicle-mounted battery (not shown) and rotates the pinion gear 3b.

The engagement/disengagement mechanism 3c switches between connection and disconnection of the pinion gear 3b with and from the ring gear 2d. For example, a reciprocating plunger shakes a pinion driving lever (both are not shown) such that the pinion gear 3b advances or retreats along its supporting axis to engage or disengage with or from the ring gear 2d.

Upon the operation of the starter 3, the starter motor 3a rotates and the engagement/disengagement mechanism 3c connects (engages) the pinion gear 3b with the ring gear 2d. The starter 3 in the operating mode can rotate the crank shaft 2c of the engine 2.

Upon the stop of the starter 3, the starter motor 3a stops the rotation and the engagement/disengagement mechanism 3c disconnects (disengages) the pinion gear 3b from the ring gear 2d. The power transmission of the starter 3 in the non-operating mode is disconnected from the engine 2.

The starter 3 has a configuration called synchronized mesh type or jump-in type, as described above.

The accessories 4 are driven by the engine 2. The accessories 4 include an alternator to charge the vehicle-mounted battery and a compressor to compress a refrigerant. The accessories 4, which are driven by the engine 2, apply a load on the engine 2. The accessories 4 are connected to the ECU 1 via control lines, and are activated or inactivated by the ECU 1.

### [1-1-2. Devices on Input Side]

The detectors 5 to 8 connected to the inputs of the ECU 1 will now be described.

The crank angle sensor (engine speed sensor) 5 detects the number Ne of revolutions of the engine 2 (hereinafter referred to as "the number Ne of engine revolutions") on the basis of the rotation angle of the crank shaft 2c. The information on the number Ne of engine revolutions from the crank angle sensor 5 is transmitted to the ECU 1.

The brake switch (brake SW) 6 detects a braking operation of a driver. The information on the braking operation from the brake switch 6 is transmitted to the ECU 1. The brake switch 6 may be replaced with any other detector, such as brake-fluid pressure sensor, that detects a braking operation of the driver. In this case, the information on the brake-fluid pressure from the brake-fluid pressure sensor is transmitted to the ECU 1.

The speed sensor 7 detects the speed V of the vehicle. The information on the speed V from the speed sensor 7 is transmitted to the ECU 1.

The other sensors 8 (illustrated with a dashed line) detect other information (e.g., a driver's manipulation of an accelerator or a steering, or a charging state of the vehicle-mounted battery), if the control of the ECU 1 requires the information in addition to the information from the crank angle sensor 5, the brake switch 6, and the speed sensor 7. The other sensors 8 may be omitted if the control requires no other information.

### [1-2. Control Unit]

Although the ECU 1 controls a wide variety of systems related to the engine 2, the following description of the ECU 1 will focus on the configurations for the idling-stop control, which involves an idling-stop to automatically stop the engine 2 and an idling-start to automatically restart the engine 2.

The ECU 1 includes an idling-stop controller 10 to stop the idling, and an idling-start controller 20 to start the idling, as functional components.

The idling-stop controller 10 stops the idling in response to an automatic-stop requirement to the operating engine 2. The idling-start controller 20 starts the idling in response to a restart requirement to the engine 2 automatically stopped by the idling-stop controller 10.

The detailed configurations of the idling-stop controller 10 and the idling-start controller 20 will now be described in sequence.

### [1-2-1. Idling-stop Controller]

The idling-stop controller 10 includes an automatic-stop requirement determiner 11 to determine an automatic-stop requirement, as a functional component.

The idling-stop controller 10 stops the idling if the automatic-stop requirement determiner 11 determines an automatic-stop requirement. The idling-stop controller 10 does not stop the idling if the automatic-stop requirement determiner 11 determines no automatic-stop requirement.

The idling-stop by the idling-stop controller 10 is achieved by the stop of the fuel injection from the injector 2a of the engine 2 and the stop of the ignition with the spark plug 2b.

The automatic-stop requirement determiner 11 determines an automatic-stop requirement if the idling-stop condition holds, and determines no automatic-stop requirement if the idling-stop condition does not hold. In other words, the automatic-stop requirement determiner 11 checks for an automatic-stop requirement through determination of satisfaction of the idling-stop condition.

The idling-stop condition the automatic-stop requirement determiner 11 determines will now be described.

The idling-stop condition refers to a condition requiring satisfaction of all the several preconditions required for an idling-stop, determination of a driver's intention to stop the vehicle, and the speed V being not higher than a speed V_{P}.

The several preconditions include, for example, the completion of warming-up of the engine 2, the non-operating mode or no requirement for the operation of the accessories 4 driven by the engine 2 (e.g., the non-operating mode of an air conditioner using the compressor, and the non-operating mode of the equipment of the vehicle powered by the alternator), the activation of catalysts for purifying exhaust gas, and the normality of the sensors related to operations of the engine 2.

The phrase "determination of a driver's intention to stop the vehicle" refers to the detection of a manipulation of a service brake and no manipulation of the accelerator.

The automatic-stop requirement determiner 11 determines satisfaction of the idling-stop condition (occurrence of an automatic-stop requirement) if a braking operation by the driver decreases the speed V to the speed Vp under satisfaction of all the several preconditions. In specific, the automatic-stop requirement determiner 11 determines whether the speed V detected with the speed sensor 7 decreases to the speed Vp, if the brake switch 6 detects a braking operation by the driver under satisfaction of the several preconditions. If the speed V is the speed Vp or lower; then the satisfaction of the idling-stop condition is determined; otherwise (speed V > speed Vp) the non-satisfaction of the idling-stop condition is determined.

The speed Vp is experimentally or empirically determined in advance, to be the highest speed immediately before the stop of the vehicle that represents a driver's intention to stop the vehicle. The speed V_{P} is, for example, 12 km/h.

The idling-stop condition may further include additional conditions, such as no driver's manipulation of the steering, and insufficient charge of the vehicle-mounted battery to power the starter 3 to restart the engine 2. In this case, the automatic-stop requirement determiner 11 determines satisfaction of the additional conditions on the basis of the information from the other sensors 8, to determine satisfaction of the idling-stop condition.

### [1-2-2. Idling-start Controller]

The idling-start controller 20 includes a restart requirement determiner 21 to determine a restart requirement, a first restarter 22 and a second restarter 23 to restart the engine 2 in mutually different ways, and a restart controller 25 to selectively activate either one of the restarters 22 and 23 depending on the number Ne of engine revolutions, as functional components.

The idling-start controller 20 starts the idling if the restart requirement determiner 21 determines a restart requirement. The idling-start controller 20 does not start the idling if the restart requirement determiner 21 determines no restart requirement.

The idling-start controller 20 activates either one of the restarters 22 and 23 to automatically restart the engine 2 (i.e., starts the idling) from the occurrence of the restart requirement to the determination of the completion of the restart of the engine 2 (explained in detail below). The restart of the engine 2 mentioned below refers to a period from the beginning of the restart of the engine 2 to the determination of the completion of the restart.

If the restart condition holds; then the restart requirement determiner 21 determines a restart requirement; otherwise the restart requirement determiner 21 determines no restart requirement. In other words, the restart requirement determiner 21 checks for a restart requirement on the basis of the satisfaction of the restart condition.

The restart condition the restart requirement determiner 21 determines will now be described.

The restart condition refers to a condition requiring at least one of "determination of a driver's intention to launch the vehicle" and "non-satisfaction of any of the several preconditions in the idling-stop condition." The phrase "determination of a driver's intention to launch the vehicle" refers to the detection of a release of the service brake by the driver. That is, satisfaction of the idling-stop condition leads to non-satisfaction of the restart condition, while satisfaction of the restart condition leads to non-satisfaction of the idling-stop condition in the embodiment.

The restart requirement determiner 21 checks for satisfaction of the restart condition through determination of a braking operation by the driver based on the information from the brake switch 6 and determination of satisfaction of the several preconditions.

The determination of a driver's intention to launch the vehicle in the restart condition should not be limited to the above explanation, and may be based on a manipulation by the driver of the accelerator or the steering, for example. In this case, the restart requirement determiner 21 checks for satisfaction of the restart condition through determination of satisfaction of other conditions on the basis of the information from the other sensors 8.

The first restarter 22, the second restarter 23, and the restart controller 25, which automatically restart the engine 2 if the restart requirement determiner 21 determines satisfaction of the restart condition (i.e., if a restart requirement occurs), will now be described in sequence.

### [1-2-2-1. First Restarter]

The first restarter 22 actuates the injector 2a to restart the engine 2 without the actuation of the starter 3 (this restart mode is hereinafter referred to as "independent restart"). In specific, the first restarter 22 controls the injector 2a to inject fuel and controls the spark plug 2b to ignite the injected fuel. The pinion gear 3b of the inactivated starter 3 is separated from the ring gear 2d of the engine 2, so that the power transmission therebetween is disconnected.

### [1-2-2-2. Second Restarter]

The second restarter 23 actuates both the starter 3 and the injector 2a to restart the engine 2 (this restart mode is hereinafter referred to as "starter restart"). The restart of the engine 2 with the second restarter 23 is different from that with the first restarter 22 in the actuation of the starter 3. That is, the second restarter 23 activates the starter 3 in addition to the injector 2a and the spark plug 2b. The rotation of the starter motor 3a of the activated starter 3 is transmitted to the crank shaft 2c, via the pinion gear 3b and the ring gear 2d connected by the engagement/disengagement mechanism 3c. This configuration can rotate the crank shaft 2c of the engine 2.

### [1-2-2-3. Restart Controller]

The restart controller 25 selectively activates either one of the first restarter 22 and the second restarter 23 depending on the number Ne of engine revolutions detected with the crank angle sensor 5. The restart controller 25 includes a normal mode controller 26 to selectively activate the restarters 22 and 23 in a normal mode, and a failure mode controller 27 to perform a failure mode control (explained below) if the restart of the engine 2 through the selective activation by the normal mode controller 26 fails, as functional components.

### [1-2-2-3-1. Normal Mode Controller]

If the number Ne of engine revolutions is larger than a first number Ne_{P1} upon the determination of a restart requirement by the restart requirement determiner 21 (i.e., in response to the restart requirement), the normal mode controller 26 performs a first restart control to selectively activate the first restarter 22. That is, the first restart control controls the independent restart.

The first number Ne_{P1} is a determination threshold at the beginning of the independent restart, and is experimentally or empirically determined in advance to be the lower limit of engine revolutions at the beginning that enables the independent restart. The first number Ne_{P1} is, for example, 700 or 800 rpm.

The phrase "in response to the restart requirement" refers to "at the timing of determination of the restart requirement that has not been determined before". The phrase "in response to the restart requirement" below also refers to the same meaning.

If the number Ne of engine revolutions in response to the restart requirement is not larger than (i.e., equal to or smaller) the first number Ne_{P1}, the normal mode controller 26 keeps the injector 2a inactive until the number Ne of engine revolutions decreases to a second number Ne_{P2}, and then performs a second restart control to selectively activate the second restarter 23 after the decrease in the number Ne of engine revolutions to the second number Ne_{P2}.

The second number Ne_{P2} is smaller than the first number Ne_{P1}, and is experimentally or empirically determined in advance to be the upper limit of engine revolutions that enables the restart of the engine 2 with the starter 3 without damage of the starter 3. The second number Ne_{P2} is, for example, 250 or 200 rpm.

If the number Ne of engine revolutions is larger than the second number Ne_{P2}, the normal mode controller 26 performs the second restart control after waiting for a decrease in the number Ne of engine revolutions to the second number Ne_{P2}. In other words, the second restart control is performed after the number Ne of engine revolutions decreases to a low level (second number Ne_{P2}) not causing damage of the starter 3.

### [1-2-2-3-2. Failure Mode Controller]

The failure mode controller 27 performs a failure mode control if a failure determiner 27a, which is a functional component of the failure mode controller 27, determines a failure.

The failure determiner 27a determines a failure in the restart of the engine 2 with the first restarter 22. That is, the failure determiner 27a determines whether the independent restart (i.e., first restart control) fails.

The failure determiner 27a determines a failure (i.e., determines that the independent restart fails), for example, through determination of satisfaction of at least one of conditions F1 and F2 below.
Condition F1: The number Ne of engine revolutions decreases to a third number Ne_{P3} during the restart of the engine 2 with the first restarter 22.
Condition F2: The number Ne of engine revolutions is not larger than the first number Ne_{P1} after a number of restart strokes of the engine 2 with the first restarter 22.

The third number Ne_{P3} in the condition F1 is smaller than the first number Ne_{P1} and larger than the second number Ne_{P2}. The third number Ne_{P3} is experimentally or empirically determined in advance to be the upper limit of engine revolutions that does not enable the independent restart even if it is continuously attempted. The third number Ne_{P3} is, for example, 500 or 600 rpm.

The condition F1 holds, for example, if the number Ne of engine revolutions continues to decrease due to unsuccessful initial ignition in the engine 2 by an attempted independent restart.

The certain number of strokes in the condition F2 is determined in advance to terminate a protracted independent restart. The certain number of strokes can be properly determined depending on a preferred timing to terminate the independent restart. The certain number of strokes is, for example, 15 or 20 strokes.

The condition F2 holds, for example, if the spark plug 2b is covered with deposits due to the excess fuel injection during the independent restart. This situation causes unstable combustion of the injected fuel, and leads to a small decrement of the number Ne of engine revolutions. The number Ne of engine revolutions therefore remains not larger than the first number Ne_{P1} and larger than the third number Ne_{P3} for a long time.

If the condition F1 or F2 holds, it is determined that the independent restart of the engine 2 fails. In the embodiment, the idling-start controller 20 determines the completion (success) of the independent restart of the engine 2 if neither of the conditions F1 and F2 holds. In specific, the idling-start controller 20 determines the completion of the independent restart of the engine 2, if the number Ne of engine revolutions remains larger than the third number Ne_{P3}, and if the number Ne of engine revolutions is larger than the first number Ne_{P1} after the certain number of strokes for the independent restart of the engine 2.

The first number Ne_{P1} is used as a threshold number for determination of the completion of the independent restart in the embodiment. The threshold number should not be limited to the first number Ne_{P1}, and may be any other number larger than the third number Ne_{P3}.

The failure mode control, which is performed by the failure mode controller 27 if the failure determiner 27a determines a failure, will now be explained.

The failure mode control keeps the fuel injection from the injector 2a stopped until the number Ne of engine revolutions decreases to the second number Ne_{P2}, and then selectively activates the second restarter 23. In other words, the failure mode control inactivates the first restarter 22, waits for a decrease in the number Ne of engine revolutions to the second number Ne_{P2}, and selectively activates the second restarter 23.

That is, if the restart of the engine 2 with the first restarter 22 fails, the failure mode control switches the current operation to the restart of the engine 2 using the second restarter 23 after the decrease in the number Ne of engine revolutions to the second number Ne_{P2}. The operation is switched after a waiting period for a decrease in the number Ne of engine revolutions to the second number Ne_{P2}. In other words, if the first restart control fails, the failure mode control performs the second restart control after the number Ne of engine revolutions decreases to a low level not causing damage of the starter 3.

If the failure determiner 27a determines satisfaction of the condition F1, the failure mode control may activate the accessories 4 until the number Ne of engine revolutions decreases to the second number Ne_{P2}. In this case, the accessories 4 in the engine 2 apply a load on the engine 2. In other words, the failure mode controller 27 may apply a load on the engine 2 during the stop of the fuel injection from the injector 2a, if the failure determiner 27a determines satisfaction of the condition F1.

If the condition F2 is satisfied, the failure mode controller 27 inactivates the accessories 4 to stop the application of a load on the engine 2.

### [2. Flowchart]

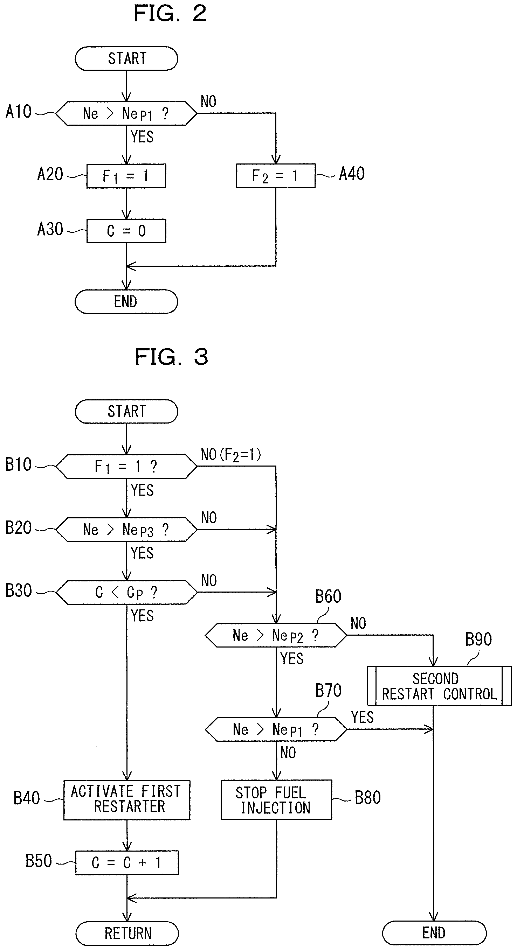

The process of the control of the idling-start controller 20 in the ECU 1 will now be explained with reference to the flowcharts of FIGS. 2 and 3. The process in FIG. 2 is performed in response to a restart requirement. The process in FIG. 3 is repeated at a cycle after the process in FIG. 2.

The steps in the flowcharts are achieved by the individual functions allocated to the hardware of the ECU 1 under the control of the software (computer program). The count value C in FIGS. 2 and 3 corresponds to the current number of strokes of the engine 2, while the count value C_{P} in FIG. 3 corresponds to the certain number of strokes.

The process of selection of the restarters 22 and 23 by the restart controller 25 in response to the restart requirement will now be explained with reference to FIG. 2.

Step A10 determines whether the number Ne of engine revolutions is larger than the first number Ne_{P1}. If the number Ne of engine revolutions is larger than the first number Ne_{P1}; then the process goes to Step A20; otherwise the process goes to Step A40.

In Step A20, a flag F₁ is set to be 1, and then the process goes to Step A30. In Step A40, a flag F₂ is set to be 1, and then the current process ends.

Steps A10, A20, and A40 indicate the procedure for the selection of either one of the first restarter 22 and the second restarter 23 by the normal mode controller 26. That is, F₁=1 indicates the selection of the first restarter 22 in response to the restart requirement, while F₂=1 indicates the selection of the second restarter 23 in response to the restart requirement.

In Step A30, the count value C is set to be 0, and the current process ends.

The periodical control process, performed after the process in FIG. 2 (i.e., if the flag F₁ or F₂ is set to be 1), will now be explained with reference to FIG. 3.

Step B10 determines whether the flag F₁ is 1 (i.e., whether the first restarter 22 is selected). If the first restarter 22 is selected, the process goes to Step B20. If the first restarter 22 is not selected (i.e., the second restarter 23 is selected (F₂=1)), the process goes to Step B60.

Step B20 determines whether the number Ne of engine revolutions is larger than the third number Ne_{P3}. Step B20 checks for satisfaction of the condition F1. If the number Ne of engine revolutions is larger than the third number Ne_{P3} (i.e., the condition F1 does not hold), the process goes to Step B30. If the number Ne of engine revolutions is not larger than the third number Ne_{P3} (i.e., the condition F1 holds), the process goes to Step B60.

Step B30 determines whether the count value C is smaller than the count value C_{P}. Step B30 checks for satisfaction of the condition F2. If the count value C is smaller than the count value C_{P} (i.e., the condition F2 does not hold), the process goes to Step B40. If the count value C is not smaller than the count value C_{P} (i.e. , the condition F2 holds), the process goes to Step B60.

In Step B40, the first restarter 22 is activated. Step B40 performs the independent restart. The process then goes to Step B50.

In Step B50, the count value C is incremented by one. The process then returns to the start.

Step B60 determines whether the number Ne of engine revolutions is larger than the second number Ne_{P2}. If the number Ne of engine revolutions is larger than the second number Ne_{P2}; then the process goes to Step B70; otherwise the process goes to Step B90.

Step B70 determines whether the number Ne of engine revolutions is larger than the first number Ne_{P1} in order to check for the completion of the restart of the engine 2. If the number Ne of engine revolutions is larger than the first number Ne_{P1}, i.e., the completion of the restart of the engine 2 is determined, then the current process ends. If the number Ne of engine revolutions is not larger than the first number Ne_{P1}, i.e., the completion of the restart of the engine 2 is not determined, then the process goes to Step B80.

In Step B80, the injector 2a is inactivated to stop the fuel injection. The process then returns to the start.

In Step B90, the second restart control is performed. In specific, the second restarter 23 is activated to restart the engine 2. If the previous process experienced Step B80 and the current process reaches Step B90, the fuel injection from the injector 2a is stopped, the starter restart is performed under the second restart control, and then the current process ends.

In the flowchart, the first restart control corresponds to the cycle of Steps B40 and B50 via the YES routes of Steps B10, B20, and B30.

The failure mode control corresponds to the process from Steps B60, B70, and B80 via the Yes route of Step B10 and the NO route of Step B20 or B30, to Step B90 via the NO route of Step B60, during two successive cycles.

### [3. Time Chart]

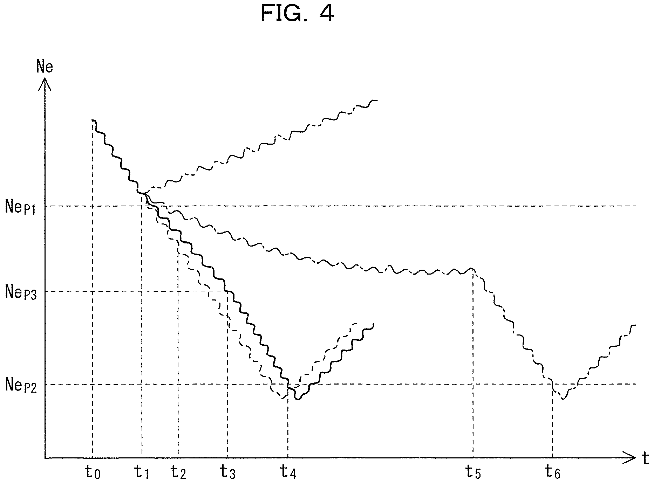

An example idling-stop control by the engine control unit according to the embodiment will now be explained with reference to FIG. 4.

At a time t₀, the automatic-stop requirement determiner 11 determines an automatic-stop requirement, and the idling-stop controller 10 automatically stops the engine 2. The number Ne of engine revolutions begins to decrease.

If the restart requirement determiner 21 determines a restart requirement at a time t₁ after the time t₀, the number Ne of engine revolutions is larger than the first number Ne_{P1}; hence, the normal mode controller 26 of the restart controller 25 selectively activates the first restarter 22. That is, the engine 2 is independently restarted.

If the restart requirement determiner 21 determines a restart requirement at a time t₂ after the time t₁, the number Ne of engine revolutions is not larger than the first number Ne_{P1}; hence, the normal mode controller 26 keeps the fuel injection from the injector 2a stopped until the number Ne of engine revolutions decreases to the second number Ne_{P2}, and then selectively activates the second restarter 23 (this process is illustrated with a dashed line). That is, the second restart control for the starter restart is performed after the inactivation of the injector 2a. This control can increase the number Ne of engine revolutions decreased to the second number Ne_{P2}, thereby definitely restarting the engine 2.

In the independent restart of the engine 2, the number Ne of engine revolutions may vary in mainly two ways. In the first case, the number Ne of engine revolutions increases as illustrated with a dash-dot-dot line, indicating successful independent restart. In the second case, the number Ne of engine revolutions does not increase or decreases as illustrated with a dash-dot line or a solid line. The second case will now be described.

If the number Ne of engine revolutions decreases (illustrated with the solid line), the number Ne decreases the third number Ne_{P3} at a time t₃. The failure determiner 27a determines satisfaction of the condition F1, and the failure mode controller 27 performs the failure mode control.

The failure mode control keeps the fuel injection from the injector 2a stopped until the number Ne of engine revolutions decreases to the second number Ne_{P2}, and then selectively activates the second restarter 23. The number Ne of engine revolutions decreases to the second number Ne_{P2} at a time t₄, and then the starter restart is performed. This control can increase the number Ne of engine revolutions after the time t₄, thereby definitely restarting the engine 2.

In the failure mode control, if the failure mode controller 27 activates the accessories 4 during the decrease in the number Ne of engine revolutions from the third number Ne_{P3} to the second number Ne_{P2}, the number Ne of engine revolutions rapidly decreases to the second number Ne_{P2}.

If the number Ne of engine revolutions remains not larger than the first number Ne_{P1} and larger than the third number Ne_{P3} for a long time (illustrated with the dash-dot line), the number of strokes for the independent restart of the engine 2 reaches the number at a time t₅. The failure determiner 27a determines satisfaction of the condition F2, and the failure mode controller 27 performs the failure mode control. The number Ne of engine revolutions decreases to the second number Ne_{P2} at a time t₆, and then the starter restart is performed. This control can increase the number Ne of engine revolutions after the time t₆, thereby definitely restarting the engine 2.

### [4. Operations and Advantageous Effects]

The engine control unit according to the embodiment, which has the configurations described above, shows the following operations and advantageous effects.

If the number Ne of engine revolutions in response to a restart requirement is larger than the first number Ne_{P1}, the restart controller 25 of the ECU 1 selectively activates the first restarter 22 to activate the injector 2a without the actuation of the starter 3, thereby performing the first restart control for the independent restart of the engine. This operation can rapidly restart the engine 2 without waiting for a decrease in the number Ne of engine revolutions.

For example, if a restart requirement occurs immediately after an automatic-stop requirement to the engine 2 having a decreased number Ne of engine revolutions larger than the first number Ne_{P1}, the first restarter 22 can rapidly achieve the independent restart of the engine 2 without starting torque. This operation can ensure the drivability.

If the number Ne of engine revolutions is not larger than the first number Ne_{P1}, the restart controller 25 keeps the injector 2a inactive until the number Ne of engine revolutions decreases to the second number Ne_{P2} (smaller than the first number Ne_{P1}), and then selectively activates the second restarter 23 to activate both the starter 3 and the injector 2a. That is, the restart controller 25 waits for a decrease in the number Ne of engine revolutions to the second number Ne_{P2} (i.e. , to a low level not causing damage of the starter 3), and then performs the second restart control for the starter restart. This operation can prevent or avoid damage in the pinion gear 3b or the engagement/disengagement mechanism 3c in the starter 3.

If the failure determiner 27a determines a failure in the restart of the engine 2 with the first restarter 22 (i.e., in the independent restart), the failure mode controller 27 keeps the injector 2a inactive until the number Ne of engine revolutions decreases to the second number Ne_{P2}, and then selectively activates the second restarter 23. That is, the failure mode controller 27 controls the failure mode to inactivate the first restarter 22, wait for a decrease in the number Ne of engine revolutions to the second number Ne_{P2}, and selectively activate the second restarter 23. This operation can definitely restart the engine 2 with the second restarter 23 if the restart of the engine 2 with the first restarter 22 fails. The injector 2a is kept inactive until the completion of actuation of the second restarter 23 for activating the starter 3. This operation can prevent or avoid damage of the starter 3.

The engine control unit can therefore achieve the compatibility between a rapid restart of the engine 2 and a secure restart of the engine 2 without damage of the starter 3.

The third number Ne_{P3} in the condition F1 for the determination of a failure in the independent restart is smaller than the first number Ne_{P1}. The restart of the engine 2 can be continuously attempted with the first restarter 22 provided that the number Ne of engine revolutions is larger than the third number Ne_{P3}. This operation can increase the opportunity for the independent restart of the engine 2, thereby increasing the opportunity to rapidly restart the engine 2.

The third number Ne_{P3} is larger than the second number Ne_{P2}. The injector 2a is kept inactive during the period in which the number Ne of engine revolutions decreases from the third number Ne_{P3} to the second number Ne_{P2}. This operation can prevent or avoid damage of the starter 3.

If the failure determiner 27a determines satisfaction of the condition F1, the failure mode controller 27 may activate the accessories 4 in the engine 2 to apply a load on the engine 2 during the stop of the fuel injection from the injector 2a. This operation can accelerate the decrease in the number Ne of engine revolutions from the third number Ne_{P3} to the second number Ne_{P2}, thereby contributing to a rapid restart of the engine 2.

If the condition F2 holds, the failure mode controller 27 does not activate the accessories 4 and applies no load on the engine 2. This operation does not shorten the period of the decrease in the number Ne of engine revolutions to the second number Ne_{P2}, thereby promoting the scavenging of the engine 2. The condition F2 may be satisfied by, for example, the spark plug 2b covered with deposits. The promotion of the scavenging in this situation leads to a secure restart of the engine 2.

As is defined in the condition F2, if the number Ne of engine revolutions is not larger than the first number Ne_{P1} after the number of restart strokes of the engine 2 with the first restarter 22, the failure determiner 27a determines a failure in the independent restart. This operation can properly terminate the incomplete independent restart, thereby contributing to a rapid restart of the engine 2.

### [5. Others]

In the embodiment, the failure mode controller 27 controls the accessories 4 to apply a load on the engine 2. The load may be applied with not the accessories 4 but any other device such as lock-up clutch (not shown). Alternatively, the load by the failure mode controller 27 may be omitted. This configuration can simplify the control logic.

In the embodiment, the restart controller 25 compares the number Ne of engine revolutions in response to a restart requirement with the first number Ne_{P1} to selectively activate one of the restarters 22 and 23. Alternatively, in an example not falling under the scope of the claims, the restart controller 25 may selectively activate one of the restarters 22 and 23 further based on the change rate ΔNe of the number Ne of engine revolutions.

An example selective activation of one of the restarters 22 and 23 by the restart controller 25 on the basis of the change rate ΔNe of the number Ne of engine revolutions will now be explained. The change rate ΔNe is detected with the crank angle sensor 5, or calculated by the ECU 1 on the basis of the number Ne of engine revolutions from the crank angle sensor 5.

If the change rate ΔNe of the number Ne of engine revolutions is higher than a change rate ΔNe_{P}, and if the number Ne of engine revolutions is at least a fourth number Ne_{P4} larger than the first number Ne_{P1}, the restart controller 25 selectively activates the first restarter 22. In other words, if the decrement of the number Ne of engine revolutions is large, the restart controller 25 uses the fourth number Ne_{P4} larger than the first number Ne_{P1} as a determination threshold for the independent restart. The fourth number Ne_{P4} is, for example, a number 50 or 100 rpm larger than the first number Ne_{P1}.

If the change rate ΔNe is lower than the change rate ΔNe_{P}, and if the number Ne of engine revolutions is at least a fifth number Ne_{P5} smaller than the first number Ne_{P1} and larger than the third number Ne_{P3}, the restart controller 25 selectively activates the first restarter 22. In other words, if the decrement of the number Ne of engine revolutions is small, the restart controller 25 uses the fifth number Ne_{P5} smaller than the first number Ne_{P1} as a determination threshold for the independent restart. The fifth number Ne_{P5} is, for example, a number 50 or 100 rpm smaller than the first number Ne_{P1}.

The change rate ΔNe_{P} is experimentally or empirically determined in advance to be a determination threshold for a decrement of the number Ne of engine revolutions, and is properly determined depending on the magnitudes of the numbers Ne_{P4} and Ne_{P5}. The change rate ΔNe_{P} is, for example, identical to the decrement of the number Ne of engine revolutions during a manual stop of the engine 2.

### REFERENCE SIGNS LIST

- 1: ECU
- 2: engine
- 2a: injector
- 2b: spark plug
- 2c: crank shaft
- 2d: ring gear
- 3: starter
- 3a: starter motor
- 3b: pinion gear
- 3c: engagement/disengagement mechanism
- 4: accessories
- 5: crank angle sensor (engine speed sensor)
- 6: brake SW
- 7: speed sensor
- 10: idling-stop controller
- 11: automatic-stop requirement determiner
- 20: idling-start controller
- 21: restart requirement determiner
- 22: first restarter
- 23: second restarter
- 25: restart controller
- 26: normal mode controller
- 27: failure mode controller
- 27a: failure determiner
- Ne_{P1}: first number
- Ne_{P2}: second number
- Ne_{P3}: third number

### (Ne_{P1} > Ne_{P3} > Ne_{P2})

The invention thus described, it will be obvious that the same may be varied in many ways. Such variations are not to be regarded as a departure from the scope of the invention as defined by the following claims.

## Claims

1. An engine control unit for automatically restarting an automatically-stopped engine (2) in response to a restart requirement, in a vehicle including an engine speed sensor (5) to detect the number (Ne) of revolutions of the engine (2), an injector (2a) to inject fuel into the engine (2), and a starter (3) to apply torque to the engine (2) via an engagement/disengagement mechanism (3c) for a gear (3b), the engine control unit comprising:
a restart controller (25)
to perform a first restart control if the number (Ne) of engine revolutions in response to the restart requirement is larger than a first number (Ne_{P1}), the first restart control restarting the engine (2) by the actuation of the injector (2a) without the actuation of the starter (3), and
to keep the injector (2a) inactive until the number (Ne) of engine revolutions decreases to a second number (Ne_{P2}) and perform a second restart control after the decrease in the number (Ne) of engine revolutions to the second number (Ne_{P2}), if the number (Ne) of engine revolutions is equal to or smaller than the first number (Ne_{P1}) in response to the restart requirement, the second restart control restarting the engine (2) by the actuation of both the starter (3) and the injector (2a), the second number (Ne_{P2}) being smaller than the first number (Ne_{P1}) ;
a failure determiner (27a) to determine a failure in the restart of the engine (2); and a failure mode controller (27) to keep the injector (2a) inactive until the number (Ne) of engine revolutions decreases to the second number (Ne_{P2}) and perform the second restart control after the decrease in the number (Ne) of engine revolutions to the second number (Ne_{P2}), if the failure determiner (27a) determines the failure;
**characterized in that**
the failure determiner (27a) determines the failure through determination of satisfaction of at least one of two conditions :
if the number (Ne) of engine revolutions decreases to a third number (NeP3) during the restart of the engine under the first restart control, the third number (NeP3) being smaller than the first number (Nepl) and larger than the second number (NeP2) or
if the number (Ne) of engine revolutions is equal to or smaller than the first number (Nepi) after a certain number of restart strokes of the engine under the first restart control, said certain number being determined in advance depending on a preferred timing to terminate the first restart control.

2. The engine control unit according to claim 1, wherein the starter (3) includes a pinion gear (3b), a motor (3a) to rotate the pinion gear (3b), and an engagement/disengagement mechanism (3c) to engage or disengage the pinion gear (3b) with or from a ring gear (2d) of the engine (2).

## Patentansprüche

1. Motorsteuereinheit zum automatischen Wiederanlassen eines automatisch abgestellten Motors (2) als Reaktion auf eine Wiederanlassanforderung in einem Fahrzeug, das einen Motordrehzahlsensor (5), um die Anzahl (Ne) der Umdrehungen des Motors (2) zu ermitteln, eine Einspritzvorrichtung (2a), um Kraftstoff in den Motor (2) einzuspritzen, und einen Anlasser (3) aufweist, um auf den Motor (2) über einen Einrückungs-/Ausrückungsmechanismus (3c) für ein Zahnrad (3b) ein Drehmoment auszuüben, wobei die Motorsteuereinheit aufweist:
eine Wiederanlasssteuereinheit (25),
um eine erste Wiederanlasssteuerung durchzuführen, wenn die Anzahl (Ne) der Motorumdrehungen als Reaktion auf die Wiederanlassanforderung größer als eine erste Anzahl (Ne_{P1}) ist, wobei die erste Wiederanlasssteuerung den Motor (2) durch die Betätigung der Einspritzvorrichtung (2a) ohne die Betätigung des Anlassers (3) wieder anlässt, und
die Einspritzvorrichtung (2a) inaktiv zu halten, bis die Anzahl (Ne) der Motorumdrehungen auf eine zweite Anzahl (Ne_{P2}) abnimmt, und eine zweite Wiederanlasssteuerung nach der Abnahme der Anzahl (Ne) der Motorumdrehungen auf die zweite Anzahl (Ne_{P2}) durchzuführen, wenn die Anzahl (Ne) der Motorumdrehungen als Reaktion auf die Wiederanlassanforderung gleich oder kleiner als die erste Anzahl (Ne_{P1}) ist, wobei die zweite Wiederanlasssteuerung den Motor (2) durch die Betätigung sowohl des Anlassers (3) als auch der Einspritzvorrichtung (2a) wieder anlässt, wobei die zweite Anzahl (Ne_{P2}) kleiner als die erste Anzahl (Ne_{P1}) ist;
eine Störungsfeststellungseinrichtung (27a), um eine Störung beim Wiederanlassen des Motors (2) festzustellen; und
eine Störungsmodus-Steuereinrichtung (27), um die Einspritzvorrichtung (2a) inaktiv zu halten, bis die Anzahl (Ne) der Motorumdrehungen auf die zweite Anzahl (Ne_{P2}) abnimmt, und die zweite Wiederanlasssteuerung nach der Abnahme der Anzahl (Ne) der Motorumdrehungen auf die zweite Anzahl (Ne_{P2}) durchzuführen, wenn die Störungsfeststellungseinrichtung (27a) die Störung feststellt;
**dadurch gekennzeichnet, dass**
die Störungsfeststellungseinrichtung (27a) die Störung durch Feststellen der Erfüllung von mindestens einer der zwei Bedingungen feststellt:
wenn die Anzahl (Ne) der Motorumdrehungen auf eine dritte Anzahl (Ne_{P3}) während des Wiederanlassens des Motors unter der ersten Wiederanlasssteuerung abnimmt, wobei die dritte Anzahl (Ne_{P3}) kleiner als die erste Anzahl (Ne_{P1}) und größer als die zweite Anzahl (Ne_{P2}) ist, oder
wenn die Anzahl (Ne) der Motorumdrehungen nach einer bestimmten Anzahl von Wiederanlasshüben des Motors unter der ersten Wiederanlasssteuerung gleich oder kleiner als die erste Anzahl (Ne_{P1}) ist, wobei die bestimmte Anzahl im Voraus abhängig von einem bevorzugten Timing festgelegt wird, um die erste Wiederanlasssteuerung zu beenden.

2. Motorsteuereinheit nach Anspruch 1, wobei der Anlasser (3) ein Ritzel (3b), einen Motor (3a), um das Ritzel (3b) zu drehen, und einen Einrückungs-/Ausrückungsmechanismus (3c) aufweist, um das Ritzel (3b) in oder aus einem Zahnkranz (2d) des Motors (2) einzurücken oder auszurücken.

## Revendications

1. Unité de commande de moteur pour le redémarrage automatique d'un moteur (2) arrêté automatiquement en réaction à une demande de redémarrage, dans un véhicule comprenant un capteur de vitesse de moteur (5) permettant de détecter le nombre (Ne) de tours du moteur (2), un injecteur (2a) permettant d'injecter du carburant dans le moteur (2), et un démarreur (3) permettant d'appliquer un couple sur le moteur (2) par l'intermédiaire d'un mécanisme d'embrayage/de débrayage (3c) pour un engrenage (3b), ladite unité de commande de moteur comprenant :
un dispositif de commande de redémarrage (25)
permettant d'exécuter une première commande de redémarrage si le nombre (Ne) de tours de moteur en réaction à la demande de redémarrage est supérieur à un premier nombre (Ne_{P1}), la première commande de redémarrage redémarrant le moteur (2) par actionnement de l'injecteur (2a) sans actionnement du démarreur (3), et
permettant de maintenir l'injecteur (2a) inactif jusqu'à ce que le nombre (Ne) de tours de moteur diminue vers un deuxième nombre (Ne_{P2}) et d'exécuter une deuxième commande de redémarrage après réduction du nombre (Ne) de tours de moteur au deuxième nombre (Ne_{P2}), si le nombre (Ne) de tours de moteur est égal ou inférieur au premier nombre (Ne_{P1}) en réaction à la demande de redémarrage, la deuxième commande de redémarrage redémarrant le moteur (2) par actionnement du démarreur (3) ainsi que de l'injecteur (2a), le deuxième nombre (Ne_{P2}) étant inférieur au premier nombre (Ne_{P1}) ;
un détecteur de défaillance (27a) permettant de déterminer une défaillance de redémarrage du moteur (2) ; et
un contrôleur de mode de défaillance (27) permettant de maintenir l'injecteur (2a) inactif jusqu'à ce que le nombre (Ne) de tours de moteur diminue vers le deuxième nombre (Ne_{P2}), et d'exécuter la deuxième commande de redémarrage après réduction du nombre (Ne) de tours de moteur au deuxième nombre (Ne_{P2}), si le détecteur de défaillance (27a) détermine la défaillance ;
**caractérisée en ce que**
le détecteur de défaillance (27a) détermine la défaillance par détermination qu'au moins une des deux conditions suivantes est satisfaite :
si le nombre (Ne) de tours de moteur diminue vers un troisième nombre (Ne_{P3}) pendant le redémarrage du moteur avec la première commande de redémarrage, le troisième nombre (Ne_{P3}) étant inférieur au premier nombre (Ne_{P1}) et supérieur au deuxième nombre (Ne_{P2}), ou
si le nombre (Ne) de tours de moteur est égal ou inférieur au premier nombre (Ne_{P1}) après un certain nombre de tentatives de redémarrage du moteur avec la première commande de redémarrage, ledit certain nombre étant déterminé préalablement en fonction d'un délai préférentiel pour terminer la première commande de redémarrage.

2. Unité de commande de moteur selon la revendication 1, où le démarreur (3) comprend un pignon (3b), un moteur (3a) pour entraîner en rotation le pignon (3b), et un mécanisme d'embrayage/de débrayage (3c) pour embrayer ou débrayer le pignon (3b) avec ou d'une couronne dentée (2d) du moteur (2).
